(19) Europäisches Patentamt
European Patent Office
Office européen des brevets

(11) **EP 1 210 619 B1**

(12) **EUROPEAN PATENT SPECIFICATION**

(45) Date of publication and mention
of the grant of the patent:
**09.11.2005 Bulletin 2005/45**

(51) Int Cl.$^7$: **G01S 17/74**, G01S 5/16

(21) Application number: **99925789.2**

(86) International application number:
**PCT/US1999/011451**

(22) Date of filing: **24.05.1999**

(87) International publication number:
**WO 2000/072047 (30.11.2000 Gazette 2000/48)**

(54) **APPARATUS AND METHOD FOR DETERMINING THE ANGULAR ORIENTATION OF AN OBJECT**

VERFAHREN UND VORRICHTUNG ZUR BESTIMMUNG DER WINKELLAGE EINES GEGENSTÄNDES

APPAREIL ET PROCEDE POUR DEFINIR L'ORIENTATION ANGULAIRE D'UN OBJET

(84) Designated Contracting States:
**DE FR GB**

(43) Date of publication of application:
**05.06.2002 Bulletin 2002/23**

(73) Proprietor: **Go Sensors, L.L.C.**
**Sarasota, Florida 34236 (US)**

(72) Inventor: **Go Sensors, L.L.C.**
**Sarasota, Florida 34236 (US)**

(74) Representative: **de Beaumont, Michel**
**Cabinet Michel de Beaumont**
**1, rue Champollion**
**38000 Grenoble (FR)**

(56) References cited:
**GB-A- 2 082 867       US-A- 4 652 917**

**Description**

**Field of the Invention**

The present invention relates to apparatus and methods for determining orientation, and more particularly, to a system for determining the angular orientation of an object throughout a range of rotation about one or more axes of rotation.

**Background of the Invention**

Presently, there exist many types of conventional optical sensing devices and systems designed to determine the orientation of an object. In general, however, such conventional devices are often very complex and expensive to manufacture. Further, many such conventional devices are highly sensitive to measurement errors.

Some conventional devices and systems have achieved orientation sensing through the utilization of transmitted electromagnetic fields, transmitted RF radio signals, computer image processing, computer vision and by way of transmitted optical signals. While such conventional orientation devices incorporate a variety of methods to perform orientation measurements of objects, many are undesirably limited by requiring two-dimensional image processing, requiring a plurality of elements to be placed on the object to be measured, and/or requiring active components to be placed on the objects to be measured. As a result, such devices are often complex, difficult to operate, difficult to manufacture and expensive.

Many conventional orientation-sensing devices are utilized in golf swing training aids. While such training aids operate to sense and track orientation and speed in one form or another, few, if any, provide a simple and inexpensive means for obtaining instantaneous, highly accurate angular orientation measurements of the golf club head.

GB-A-2082867 discloses such an optical system having an orientation dependent reflection means in the form of an encoder, a light source and a light sensing means. The reflection from the encoder is determined by said light sensing means in dependence of the angular orientation of the object, the reflection means including a plane reflecting surface wherein the entire surface reflects incident light, whereby the location of the reflection point is not varied when the reflection means is rotated.

**Summary of the Invention**

The present invention is directed to apparatus and methods for determining the orientation of an object about one or more axes of rotation said apparatus and method having the features of the ensuing claims 1 and 8, respectively.

In one embodiment, the invention comprises an orientation dependent reflector in combination with an orientation independent reflector such that when placed on an object and utilized in a system that further includes a light source means and a light sensing means, the centroids of reflection on the orientation dependent reflector and orientation independent reflector can be determined wherein the distance between the centroids of reflection is calculated and the absolute orientation of the object is obtained.

In one embodiment, the orientation dependent reflector is in the form of a specular-dome reflector that includes an exterior curvature such that the reflection of a stationary light source moves on the specular-dome reflector in correspondence to the angular orientation of the object about an axis of interest. Further, retro reflectors are coupled to the specular-dome reflector at two opposing positions so as to provide a reference point of reflection.

The orientation dependent reflector utilized herein may, alternatively, be in the form of an arcuate double reflector that provides a reflection having a centroid that moves in correspondence to the angular orientation of the object in one axis of interest. The arcuate double reflector is comprised of an elongated body having an exterior side whereupon first and second angled portions having respective first and second specular reflecting surfaces are coupled thereto such that the first and second specular reflecting surfaces angularly oppose each other and converge to from a right angle therebetween. The first and second specular reflecting surfaces cooperate to then optically reflect light from the light source means so to facilitate the determination of angular orientation of an object.

Similar to the specular-dome reflector, the arcuate double reflector may be alternatively used in combination with a retro reflector. Retro reflectors are coupled to the arcuate double reflector at opposing ends of the elongated body. The arcuate double reflector in combination with the retro reflectors operates to obtain absolute angular orientation measurements.

In another embodiment, the present invention discloses a method for optically determining the angular orientation of an object throughout a range of rotation about at least one axis of rotation. According to this embodiment, the method comprises the steps of providing an optically detectable beam of light, providing an orientation dependent reflection means for producing an optical reflection that varies in position in correspondence to specific angular orientations about the axis of rotation, the orientation dependent reflection means capable of being coupled to the object, detecting reflections on the orientation dependent reflection means from a position adjacent to where the projected beam of light is produced, and determining the angular orientation of an object throughout a range of rotation about at least one axis of rotation from the optically detectable beam of light being reflected from the orientation dependent reflection means.

Other advantages, novel features, and objects of the invention will become apparent from the following detailed description of the invention when considered in conjunction with the accompanying drawings.

## Brief Description of the Drawings

The accompanying drawings are not intended to be drawn to scale. In the drawings, each identical or nearly identical component that is illustrated in various figures is represented by a like numeral. For purposes of clarity, not every component may be labeled in every drawing, wherein:

Fig. 1 is a front elevational view of the specular-dome reflector with the relevant axes of rotation oriented wherein rotations along the X and Z axes are capable of being measured;

Fig. 2 is a side elevational view of the specular-dome reflector with the relevant axes of rotation depicted;

Fig. 3 is a front elevational view of the specular-dome reflector seen in Figs. 1 and 2 further illustrating the relative positions of additional retro reflectors coupled to the specular-dome reflector and the centroid of reflection on the orientation dependent specular-dome reflector;

Fig. 4 is a top plan view of the arcuate double reflector illustrating the elongated body, the opposing ends, the exterior side and the relevant axis of rotation for which measurements can be sensed there along;

Fig. 5 is a front elevational view of the arcuate double reflector illustrating the elongated body, the first angled portion and the second angled portion in their relative positions to each other along with the relevant axes of rotation for which measurements can be sensed there along;

Fig. 6 is a cross-sectional view of the arcuate double reflector taken along line 6-6 as depicted in Fig. 5 illustrating the elongated body, the first angled portion, the second angled portion, the first specular reflecting surface, the second specular reflecting surface and the right angle formed by the first and second angled portions in their relative positions to each other;

Fig. 7 is a top plan view of the arcuate double reflector illustrating the addition of retro reflectors coupled thereto at the opposing ends;

Fig. 8 is a graphical diagram illustrating a light sensor detecting and measuring the angles of arrival for various objects which will aid in the explanation of the present invention;

Fig. 9 is a graphical presentation of the various objects shown to be detected by the light sensor in Fig. 8 which will aid in the explanation of the present invention;

Figs. 10A, 10B, 10C and 10D are graphical diagrams illustrating the determination of the angles of arrival of a reflected beam of light from a specular-dome reflector shown in three distinct rotated positions which will further aid in the explanation of the present invention;

Fig. 11 is a graphical diagram illustrating the important dimensions utilized in determining the angle of arrival of a reflected beam of light in accordance with associated mathematical formulas which will aid in the explanation of the present invention;

Figs. 12 and 13 are respective back and side elevational views of a golf club illustrating the shaft, the hosel and the head having a face and back in their relative positions to each other along with orientation dependent reflectors positioned thereon; and

Fig. 14 is a perspective view of a package having orientation dependent reflectors positioned thereon.

## Detailed Description

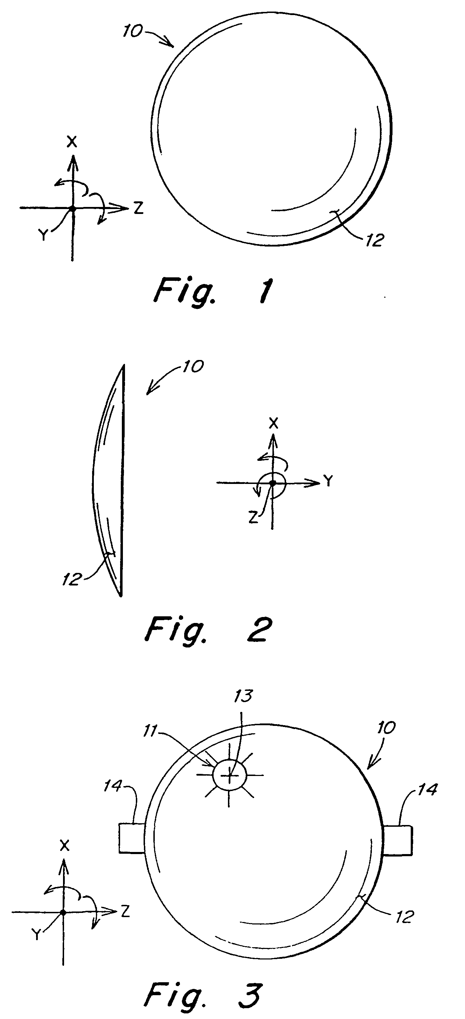

In referring to Figs. 1, 2 and 3, an orientation dependent reflection means is illustrated having two axes of rotation depicted for which angular orientation measurements can be performed. There are many different forms of orientation dependent reflection means currently present in the industry today, however, only a few provide for angular orientation measurement capabilities in more than one axis of rotation.

The specific type of orientation dependent reflection means depicted in Figs. 1, 2 and 3 is that of a specular-dome reflector 10. The specular-dome reflector 10 can be seen to have an exterior curvature side 12 in the shape of a partial sphere which serves to provide a specular type of reflection. Further, in referring specifically to Fig. 3, the specular-dome reflector 10 can be seen to include retro reflectors 14 coupled adjacent the exterior curvature side 12 with the region over which light is reflected on the specular-dome reflector 10 being shown at 11 and the centroid of that reflection being shown at 13. The retro reflectors 14 can be seen to be coupled to the specular-dome reflector 10 at positions so to oppose one another across the specular-dome reflector 10. Retro reflectors 14 facilitate reflecting light back towards the light source parallel to the direction of arrival of the light. Many types of retro reflectors exist today and it is preferable that the retro reflector 14 utilized herein be of a suitably small construction so as to facilitate being used in combination with the specular-dome reflector 10.

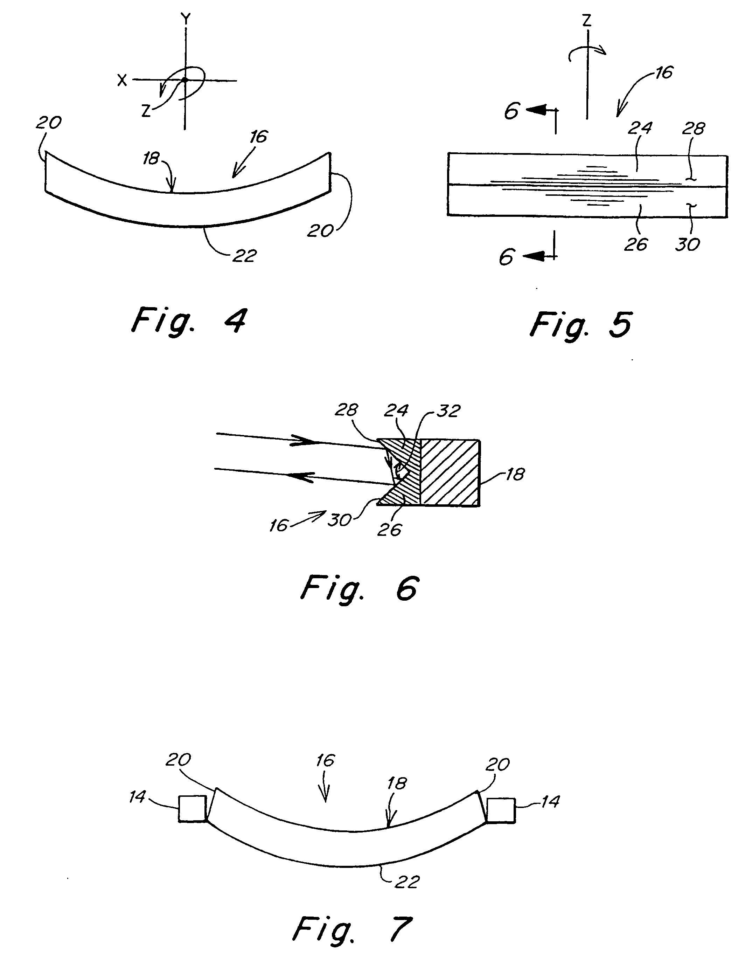

In referring now to Figs. 4, 5, 6 and 7, another form of orientation dependent reflection means is illustrated for which angular orientation measurements can be performed in one axis of rotation, the Z-axis. Illustrated herein, the orientation dependent reflection means is in the form of an arcuate double reflector 16. In referring specifically to Fig. 4, the arcuate double reflector 16 can be seen to include an elongated body 18 having opposing ends 20 and an exterior side 22. Additionally, in referring specifically to Figs. 5 and 6, the arcuate double reflector 16 can be seen to further include a first angled portion 24 and a second angled portion 26 coupled to the exterior side 22 of the elongated body 18. The first angled portion 24 has a first specular reflecting surface 28 and the second angled portion 26 has a second specular reflecting surface 30 which angularly oppose each other and converge to form a right angle 32 therebetween. Directional arrows are depicted in Fig. 6 illustrating the path of a reflected optically-detectable beam of light.

In referring now to Fig. 7, the arcuate double reflector 16 can be seen to further include an orientation independent reflection means. The orientation independent reflection means is comprised of retro reflectors, generally indicated by reference numeral 14. The retro reflectors 14 are coupled to the opposing ends 20 of the elongated body 18 of the arcuate double reflector 16. The arcuate double reflector 16, in combination with the retro reflectors 14, facilitates the determination of absolute angular orientation of an object relative to an axis of rotation extending perpendicular to the elongated body 18. The retro reflectors 14 used herein are preferably of a suitably small construction to facilitate use in combination with the arcuate double reflector 16.

In construction, the specular-dome reflector and the arcuate double reflector 16 are preferably formed such that the respective exterior curvature side 12 of the specular-dome reflector 10 and the arcuate nature of the arcuate double reflector 16 are designed to correspond to the range through which orientation will be measured. A larger radii of curvature facilitates performing more sensitive measurements over a small range of rotation and a smaller radii of curvature facilitates performing less sensitive measurements over a large range of rotation. Further, the specular nature of the exterior curvature side 12 and the first and second specular reflecting surfaces 28 and 30 of the arcuate double reflector 16 are formed from material having a sufficiently suitable surface finish so to produce specular reflections.

Now that the structure of the orientation dependent reflection means employed herein in the form of a specular-dome reflector 10 and, alternatively in the form of an arcuate double reflector 16, has been described in detail, their function as utilized in the system of the present invention may now be readily understood.

In general, the movement of an object is comprised of both rotational and translational aspects. This is known as the Screw Theory which was developed in the 19th century and continues to be the standard of training in machine design. The Screw Theory describes how the movement of an object can be decomposed into a rotation about an arbitrary chosen center of rotation and a translation of that center of rotation. Hence, the designer of the system of the present invention must select the coordinate frame in which he chooses to express rotation.

The present invention is directed toward orientation sensing and, hence, in order to simplify the explanation of the operation, it is assumed that: (1) rotations are being measured about the front center of a specular-dome reflector 10; and (2) that some other means of determining the translation of the specular-dome reflector 10 is provided (which may be due to the sensing of translation not being required, the translation being sensed by any one of a large number of means known in the art such as a laser range finder, or that the translation variables are determined by the optical system with which the present invention is being practiced).

In explaining the orientation of the system for determining the angular orientation of an object throughout a range of rotation about at least one axis of interest, it is necessary for the system to include a light source means for providing an optically detectable beam of light. The light source means is also referred to herein as the light source 36. The light source 36 is designed to project an optically-detectable beam of light towards an orientation dependent reflection means, for which a specular-dome reflector 10 will be used for simplifying the explanation of the system operation.

The light source 36 projects an optically detectable beam of light towards the specular-dome reflector 10 such that a reflection appears thereon which is subsequently detected by a light sensing means. The light sensing means is also referred to herein as the light sensor 38. The light sensor 38 utilized to detect the reflection on the specular-dome reflector 10 is required to be capable of detecting the centroid 13 of reflection on the specular-dome reflector 10. The location of the centroid 13 of reflection on the specular-dome reflector 10 may be detected in several ways. The location of the centroid 13 may be detected by equipping the specular-dome reflector 10 with a light filter such that a sensible property of the reflected beam of light covaries with the centroid 13 of reflection and is subsequently detected with the light sensor 38. The light filter utilized herein is preferably non-uniform in nature. The location of centroid 13 of the reflection may also be determined by detecting the angle of arrival of the reflected beam of light. Examples of sensible optical properties which can be made to covary with the centroid 13 of reflection on the orientation dependent reflection means are polarization and color balance or spectrum. These properties can be made to vary in a controlled fashion across the area of the orientation dependent reflection means by equipping the orientation dependent reflecting means with a non-uniform polarization or color balance filter (not shown).

However, for simplicity, the determination of the centroid 13 of the reflection will be discussed further using the procedure of detecting the angle of arrival of the reflected beam of light with the light sensor 38. There presently exists many light sensing means that are capable of detecting the angle of arrival of a reflected beam of light such as a television-type camera, a linear array of photo detectors with appropriate optics, a quad cell or a position-sensitive detector. However, a light sensor 38 in the form of a television-type camera will be considered herein, for simplicity sake, in the explanation of determination of the angle of arrival of the reflected beam of light.

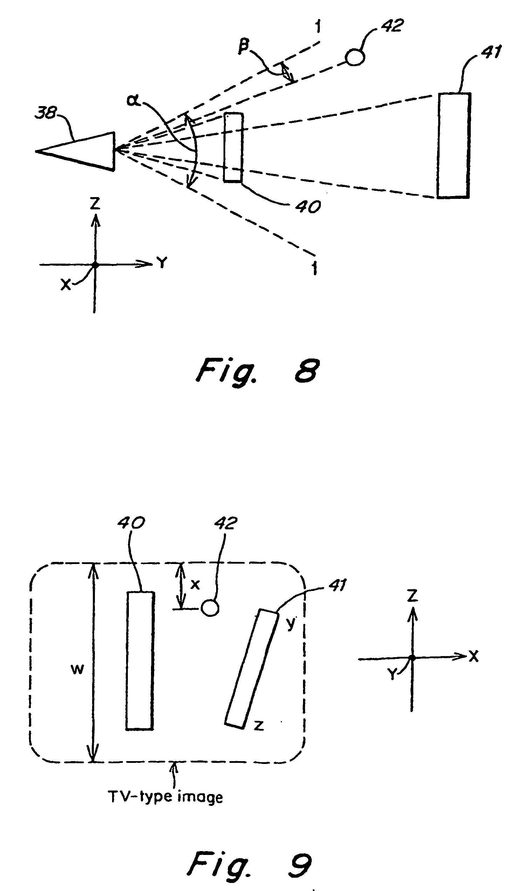

In referring now to Figs. 8 and 9, the explanation of the determination of the angle of arrival of a reflected beam of light may be better understood. In Fig. 8, a light sensor 38 in the form of a television camera can be seen sensing three individual objects 40, 41 and 42. It is seen that the apparent sizes of objects 40 and 41 are not determined by their true sizes, but by the angles they subtend from the perspective of the television camera. The full vertical height x of object 42 is proportional to the screen height w, the angle $\alpha$, and the angle of arrival $\beta$ of a beam of light reflected from object 42. Thus, from this proportional relationship, the angle of arrival $\beta$ may be represented as:

$$\beta = \alpha \ (x/w).$$

Therefore, with proper calibration, the angle of arrival of a reflected beam of light from any point in the field of view can be measured with respect to any desired reference. The angular size of the field of view $\alpha$ is determined by the length of the lens and the size of the image detector utilized in the television camera. The total screen height w is a known parameter of the image detector and the coordinates of the image of any point B may be determined by computer image processing.

Further, Figs. 8 and 9 illustrate angle measurements in only one axis, the Z-axis, with the objects rotated about the X-axis. Conversely, horizontal measurements in the image would correspond to measuring angles produced when rotating the objects 40, 41 and 42 about the Z-axis. As for the determination of the orientation of an object rotated about the Y-axis, the determination is readily obtained by determining the relative positions of two points on the image of object 41 from which their relative position would determine the Y-axis orientation. As illustrated in Fig. 9, it is apparent that object 40 is arranged vertically and that object 41 is rotated slightly about the Y-axis. Hence, the determination of the locations of corners c and d of object 41 would indicate the Y-axis orientation thereof.

Thus, as can be seen, it is the X and Z axis rotations which are difficult to measure with the techniques of the prior art while sensing along the Y-axis. Hence, it is the measurement of the X and Z axes rotations for which the present invention is suited. The application of one specular-dome reflector 10 would facilitate the measurement of angular orientation during rotation about the X and Z axes. Alternatively, the application of two properly arranged arcuate double reflectors 16 would facilitate the measurement of angular orientation during rotations about the X and Z axes.

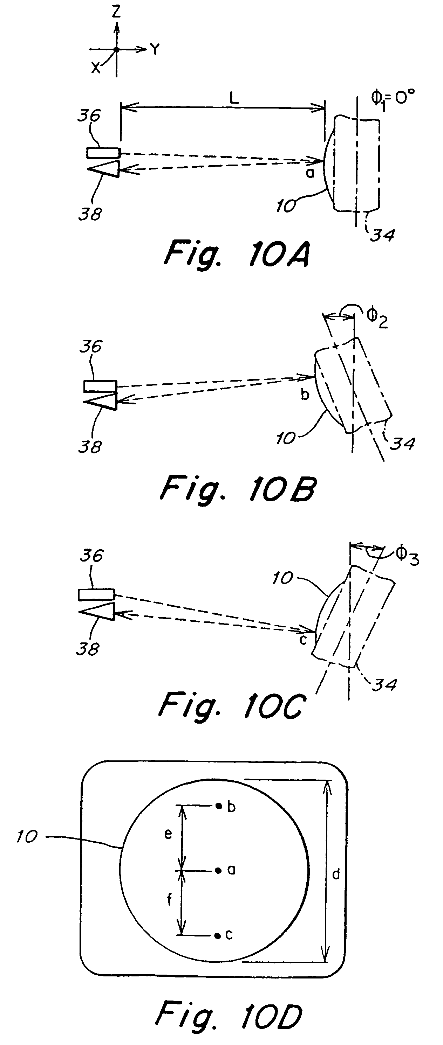

In referring now to Figs. 10A, 10B, 10C and 10D, a method of utilization of the specular-dome reflector 10 can be seen. In Figs. 10A, 10B and 10C, the object 34 (shown in phantom) can be seen illustrated in three different orientations with $\phi_1 = 0°$, $\phi_2 = +20°$ and $\phi_3 = -20°$, the angle $\phi$ thereby indicating a rotation of the object 34 about the X-axis. The object 34 is shown with a specular-dome reflector 10 coupled thereto to provide the reflection of a beam of light projected from the light source 36 and detected by the light sensor 38. The centroid 13 of reflection detected by the light sensor 38, corresponding to each angular orientation, is indicated by points a, b and c in Figs. 10A-D. It is to be noted that only one centroid 13 of reflection is detected at a time corresponding to a specific angular orientation of the object 34. Thus, the distance between the centroids 13 of the reflections from point a, representing $\phi - 0°$, are indicated as lengths e and f and the total size of the specular-dome reflector 10 is indicated as length d.

Thus, the location of the centroids 13 of the reflections on the specular-dome reflector 10, specifically points a, b and c, can generally be represented by the variable X, wherein X is the point at which the surface normal bisects the beam of light from the light source 36 to X and from X to the light sensor 38. Therefore, X would represent the varying centroid 13 of reflection in correspondence to the angular orientation to which the object 34 is rotated. The mathematical relationship between the orientation of the object 34 and the location of varying point X is determined by geometry, although quite complex geometries.

However, it is always possible when orientation is specified to compute the point on the specular-dome reflector 10 which will be the centroid 13 of reflection. Various software programs are currently available in the industry for performing these geometric calculations. In using this approach, a table can then be generated by calculating the varying points of X for each of many different orientations and recording the orientations. Then, when the location of the centroid 13 of reflection is measured by the light sensor 38, the corresponding orientation is determined from the previously generated table.

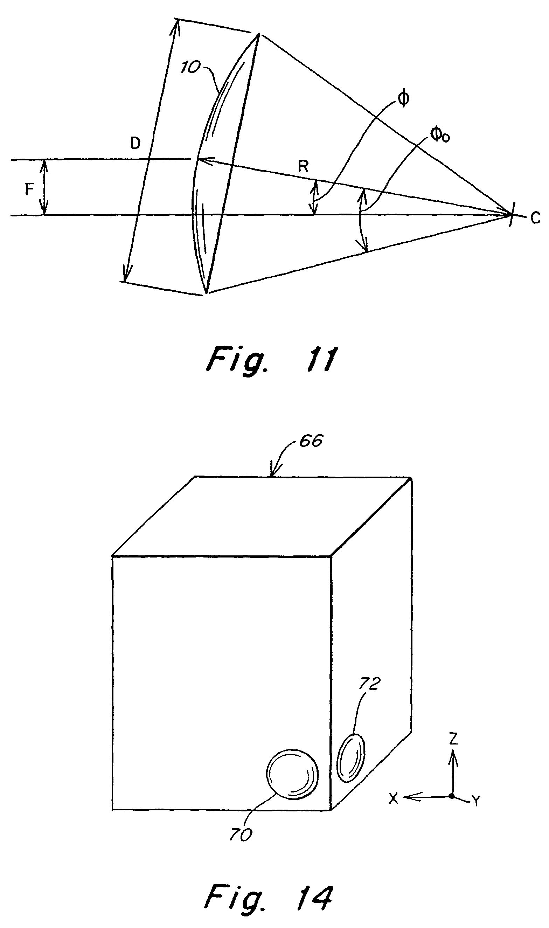

When two simplifying conditions are obtained, the direct calculation becomes easily tractable. For tractable direct calculations to be possible, the required conditions are: (1) that the light source 36 and light sensor 38 be spatially positioned far from the specular-dome reflector 10 in relation to the size of the specular-dome reflector 10 (that is, L in Fig. 10A is large relative to D in Fig. 11); and (2) that the specular-dome reflector 10 has a nearly constant exterior curvature side 12. When these conditions are met, determination of the orientation of the object 34 from the centroid 13 of reflection detected by the light sensor 38, the angle of arrival reduces to the mathematical relationship as represented by:

$$\phi = \arcsin\left(\frac{F}{R}\right) = \arcsin\left(\frac{F\,2\sin(\phi_0)}{D}\right) = \arcsin\left(\frac{f}{d}\,2\sin(\phi_0)\right) \approx 2\phi_0\frac{f}{d}$$

wherein (referring to Figs. 10A-D and 11):

$\phi$ is the orientation angle to be measured;
$R$ is the radius of curvature of the specular-dome reflector 10;
$F$ is the linear displacement of the centroid 13 of reflection detected by the light sensor 38;
$\phi_0$ is the half-angle subtended by the specular-dome reflector 10;
$D$ is the length of the front face of the specular-dome reflector 10;
$f$ is the displacement of the centroid 13 of reflection detected by the light sensor 38; and
$d$ is the apparent length of the front face of the specular-dome reflector 10 detected by the light sensor 38.

The determination of the angles of arrival of reflections from a retro reflector are determined in a similar manner as discussed above. Hence, the angles of arrival determined from a combination of the specular-dome reflector 10 or arcuate double reflector 16 in combination with a retro reflector 14 are similarly obtained wherein the distance between the points of reflection is determined by obtaining the angles of arrival in accordance with the above described procedure.

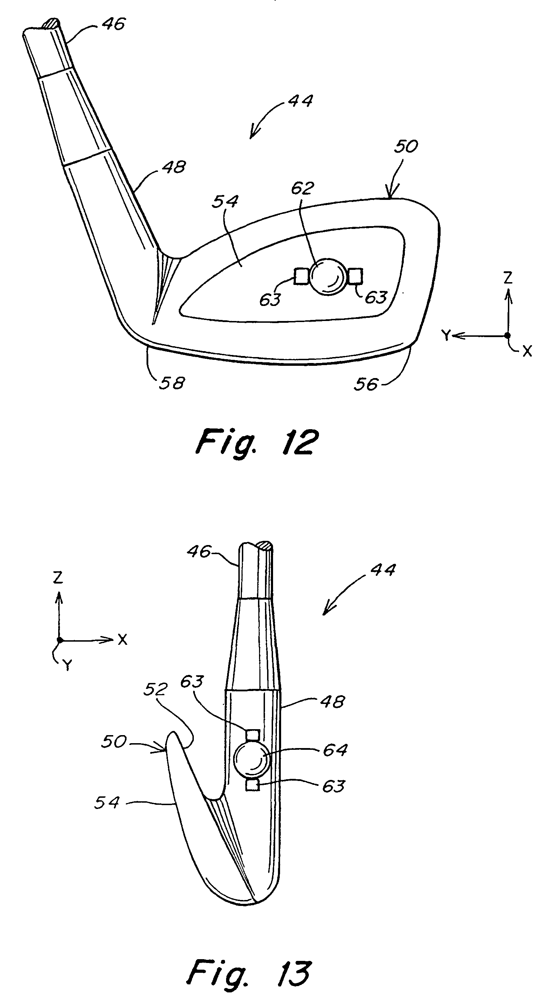

In referring now to Figs. 12 and 13, an embodiment comprising the placing of combined orientation dependent and independent reflectors on a golf club 44 is illustrated. The golf club 44 can be seen to include a shaft 46, a hosel 48 and a head 50. The hosel 48 and head 50 are integral and the shaft 46 is coupled to the hosel 48. The head 50 further includes a face 52, a back 54, a toe 56 and a heel 58. The head 50 can be seen to further include orientation dependent reflectors, in the form of specular dome reflectors 62 and 64. The specular-dome reflectors 62 and 64 are shown further having orientation independent reflectors 63 coupled respectively thereto. The specular-dome reflector 62 facilitates angular orientation measurements for "pitch" and "yaw" in the Y and X axes respectively. In referring to Fig. 13, the specular-dome reflector 64 facilitates angular orientation measurements in the X-axis for "lie".

Further, in referring to Fig. 14, an alternate application embodiment can be seen utilizing the orientation dependent reflection means of the present invention in the form of specular-dome reflectors 10. Fig. 14 illustrates a package 66 being moved along and about in some stage of a multi-part process wherein angular orientation is important. The specular-dome reflectors 70 and 72, as positioned in Fig. 14, would provide angular orientation measurement in the X and Z axes and the Y and Z axes, respectively.

**Claims**

1.    An optical system for determining angular orientation of an object throughout a range of rotation about at least one axis of rotation, said optical system comprising in combination:

an orientation dependent reflection means to be coupled to the object, a light source and a light sensing means, the light source means (36) providing an optically detectable beam of light towards the orientation dependent reflection means, said light source means being positioned at a distance from said orientation dependent reflection means; and

**characterized in that**
the orientation dependent reflection means (10, 16) providing an optical reflection having at least one detectable property corresponding to a reflection point on a surface of the orientation dependent reflection means that varies in location with respect to a rotation of the orientation dependent reflection means about at least one of the at least one axis of rotation;
the light sensing means (38) is provided for detecting optical reflections on said orientation dependent reflection means so as to facilitate the determination of angular orientation, said light sensing means being positioned adjacent said light source means, whereupon at least the point of reflection is determined thereon by said light sensing means and the angular orientation of the object is determined.

2. The optical system as recited in claim 1, further comprising an orientation independent reflection means (14) for providing an optical reflection that corresponds to a constant point of reference, said orientation independent reflection means being fixedly coupled to said orientation dependent reflection means such that both of said reflection means simultaneously provide optical reflections that vary in distances from each other in correspondence to specific angular orientations.

3. The optical system as recited in claims 1 or 2, wherein said orientation dependent reflection means is comprised of a specular-dome reflector (10) having an exterior curvature side (12) facing said light source means, whereby said specular-dome reflector is capable of facilitating the determination of the angular orientation of an object relative to two axes of rotation.

4. The optical system as recited in claims 1 or 2, wherein said orientation dependent reflection means is comprised of an arcuate double reflector (16), said arcuate double reflector including an elongated body (18) having an exterior side (22), and first and second angled portions (24, 26) having respective first and second specular reflecting surfaces (28, 30) thereon coupled to said exterior side such that said first and second specular reflecting surfaces angularly oppose each other and converge to form a right angle therebetween, whereby said first and second specular reflecting surfaces cooperate to optically reflect the beam of light so to facilitate the determination of angular orientation relative to an axis of rotation extending perpendicular to said elongated body.

5. The apparatus as recited in claim 4, wherein said elongated body (18) and said first and second angled portions of said arcuate double reflector are integral.

6. The optical system as recited in any of claims 2-4, wherein said orientation independent reflection means is comprised of a retro reflector (14), whereby said retro reflector facilitates reflecting the beam of light back towards said light source means parallel to the direction of arrival of the beam of light.

7. The optical system as recited in any of claims 1-6, wherein said light sensing means determines the point of reflection on said orientation dependent reflection means by detecting the angle of arrival of the reflected optically detectable beam of light.

8. The optical system as recited in any of claims 1-7, wherein the at least one property includes a centroid of the optical reflection.

9. The optical system as recited in claims 8, wherein the light sensing means determines the point of reflection corresponding to the centroid of the optical reflection.

10. A method for optically determining an angular orientation of an object throughout a range of rotation about at least one axis of rotation, said method comprising the steps of:

    projecting an optically detectable beam of light toward the object;
    producing at least one orientation dependent optical reflection of the beam of light from the object;
    detecting the at least one orientation dependent optical reflection from a first location adjacent to a second location from which the beam of light is projected; and
    determining the angular orientation of the object based on the at least one orientation dependent optical reflection,

    **characterized in that** the at least one orientation dependent optical reflection has at least one property corresponding to a reflection point that varies in position across a surface of the object in correspondence to specific angular orientations of the object about the at least one axis of rotation.

11. The method as recited in claim 10, wherein the step of determining the angular orientation further comprises steps of:

    determining an angle of arrival of the at least one orientation dependent optical reflection;

**EP 1 210 619 B1**

determining at least one point of reflection on the object based on the angle of arrival; and
determining the angular orientation based on the at least one point of reflection.

**12.** The method as recited in claims 10 or 11, further comprising steps of:

producing at least one orientation independent optical reflection of the beam of light from the object, the at least one orientation independent optical reflection corresponding to a constant point of reference on the object;
detecting the at least one orientation independent optical reflection;
determining a separation distance between the at least one orientation independent optical reflection and the at least one orientation dependent optical reflection; and
determining the angular orientation of the object based on the separation distance.

**13.** The method as recited in any of claims 10-12, wherein the step of producing at least one orientation dependent optical reflection includes a step of coupling a specular-dome reflector (10) to the object, the specular-dome reflector having an exterior curvature side (12) facing the beam of light projected toward the object.

**14.** The method as recited in any of claims 10-12, wherein the step of producing at least one orientation dependent optical reflection includes a step of coupling an arcuate double reflector (16) to the object, the arcuate double reflector including an elongated body (18) having an exterior side (22), and first and second angled portions (24, 26) having respective first and second specular reflecting surfaces (28, 30) thereon coupled to said exterior side, such that said first and second specular reflecting surfaces angularly oppose each other and converge to form a right angle therebetween, whereby said first and second specular reflecting surfaces cooperate to optically reflect the beam of light so as to facilitate a determination of the angular orientation of the object relative to an axis of rotation extending perpendicular to said elongated body.

**15.** The method as recited in any of claims 12-14, wherein the step of producing at least one orientation independent optical reflection includes a step of coupling at least one retro reflector (14) to the object, the at least one retro reflector positioned so as to face the beam of light projected toward the object, the retro reflector reflecting the at least one orientation independent optical reflection parallel to a direction of arrival of the beam of light.

**16.** The method as recited in any of claims 10-15, wherein the step of determining the angular orientation of the object further comprises steps of:

modifying at least one sensible property of the beam of light such that the at least one sensible property is imparted to the at least one orientation dependent optical reflection and covaries with the position of the at least one orientation dependent optical reflection; and
detecting the at least one sensible property of the at least one orientation dependent optical reflection.

**17.** The method as recited in claim 16, wherein at least one sensible property of the beam of light is a polarization of the beam of light.

**18.** The method as recited in claims 16 or 17, wherein at least one sensible property of the beam of light is a color spectrum of the beam of light.

**19.** The method as recited in any of claims 10-15, wherein the act of determining the angular orientation of the object includes an act of determining a point of reflection corresponding to a centroid of the orientation dependent optical reflection.

**Patentansprüche**

**1.** Optisches System zum Bestimmen einer Winkelorientierung eines Gegenstands über einen Rotationsbereich hinweg um mindestens eine Rotationsachse, wobei das optische System in Kombination folgendes aufweist:

mit dem Gegenstand zu koppelnde, orientierungsabhängige Reflexionsmittel, eine Lichtquelle und Lichtabfühlmittel, wobei die Lichtquellenmittel (36) einen optisch detektierbaren Lichtstrahl zu den orientierungsabhängigen Reflexionsmitteln hin vorsehen, wobei die Lichtquellenmittel in einem Abstand von den orientierungsabhängigen Reflexionsmitteln angeordnet sind;

**dadurch gekennzeichnet, dass**
die orientierungsabhängigen Reflexionsmittel (10, 16) eine optische Reflexion vorsehen, und zwar mit mindestens einer detektierbaren Eigenschaft entsprechend einem Reflexionspunkt auf einer Oberfläche der orientierungsabhängigen Reflexionsmittel, dessen Lage sich bezüglich einer Rotation der orientierungsabhängigen Reflexionsmittel um mindestens eine der mindestens einen Rotationsachse ändert; und die Lichtabfühlmittel (38) vorgesehen sind zum Detektieren optischer Reflexionen auf den orientierungsabhängigen Reflexionsmitteln, um die Bestimmung der Winkelorientierung zu erleichtern, wobei die Lichtabfühlmittel benachbart zu den Lichtquellenmitteln angeordnet sind, woraufhin mindestens der Reflexionspunkt darauf durch die Lichtabfühlmittel bestimmt wird und die Winkelorientierung des Gegenstands bestimmt wird.

2. Optisches System gemäß Anspruch 1, das ferner orientierungsunabhängige Reflexionsmittel (14) aufweist zum Vorsehen einer optischen Reflexion, die einem konstanten Bezugspunkt entspricht, wobei die orientierungsunabhängigen Reflexionsmittel mit den orientierungsabhängigen Reflexionsmitteln fest gekoppelt sind, so dass beide Reflexionsmittel gleichzeitig optische Reflexionen vorsehen, die sich hinsichtlich Abständen voneinander entsprechend der spezifischen Winkelorientierungen ändern.

3. Optisches System gemäß Anspruch 1 oder 2, wobei die orientierungsabhängigen Reflexionsmittel aus einem Spiegelkuppelreflektor (10) bestehen, dessen äußere Krümmungsseite (12) zu den Lichtquellenmitteln weist, wodurch der Spiegelkuppelreflektor in der Lage ist, die Bestimmung der Winkelorientierung des Gegenstands mit Bezug auf zwei Rotationsachsen zu erleichtern.

4. Optisches System gemäß Anspruch 1 oder 2, wobei die orientierungsabhängigen Reflexionsmittel aus einem bogenförmigen Doppelreflektor (16) bestehen, wobei der bogenförmige Doppelreflektor einen langgestreckten Körper (18) mit einer Außenseite (22) sowie erste und zweite abgewinkelte Teile (24, 26) umfasst, wobei die ersten und zweiten abgewinkelten Teile (24, 26) erste bzw. zweite Spiegelreflexionsoberflächen (28, 30) darauf besitzen und mit der Außenseite gekoppelt sind, so dass die ersten und zweiten Spiegelreflexionsoberflächen einander winkelmäßig gegenüberliegen und konvergieren, um einen rechten Winkel dazwischen zu bilden, wodurch die ersten und zweiten Spiegelreflexionsoberflächen zusammenarbeiten, um den Lichtstrahl optisch zu reflektieren, um die Bestimmung der Winkelorientierung bezüglich einer Rotationsachse zu erleichtern, die sich senkrecht zu dem langgestreckten Körper erstreckt.

5. Optisches System gemäß Anspruch 4, wobei der langgestreckte Körper (18) und die ersten und zweiten abgewinkelten Teile des bogenförmigen Doppelreflektors integral ausgebildet sind.

6. Optisches System gemäß einem der Ansprüche 2 bis 4, wobei die orientierungsunabhängigen Reflexionsmittel aus einem Retro-Reflektor (14) bestehen, wodurch der Retro-Reflektor die Reflexion des Lichtstrahls zurück zu den Lichtquellenmitteln parallel zu der Ankunfts- oder Auftreffrichtung des Lichtstrahls erleichtert.

7. Optisches System gemäß einem der Ansprüche 1 bis 6, wobei die Lichtabfühlmittel den Reflexionspunkt auf den orientierungsabhängigen Reflexionsmitteln bestimmen durch Detektieren des Auftreffwinkels des reflektierten, optisch detektierbaren Lichtstrahls.

8. Optisches System gemäß einem der Ansprüche 1 bis 7, wobei die mindestens eine Eigenschaft einen Mittelpunkt oder Zentroid der optischen Reflexion umfasst.

9. Optisches System gemäß Anspruch 8, wobei die Lichtabfühlmittel den Reflexionspunkt entsprechend dem Mittelpunkt oder Zentroid der optischen Reflexion bestimmen.

10. Verfahren zum optischen Bestimmen einer Winkelorientierung eines Gegenstands über einen Rotationsbereich hinweg um mindestens eine Rotationsachse, wobei das Verfahren die folgenden Schritte aufweist:

Projizieren eines optisch detektierbaren Lichtstrahls zu dem Gegenstand hin;
Erzeugen mindestens einer orientierungsabhängigen optischen Reflexion des Lichtstrahls von dem Gegenstand;
Detektieren der mindestens einen orientierungsabhängigen optischen Reflexion von einer ersten Stelle benachbart zu einer zweiten Stelle, von der der Lichtstrahl projiziert wird; und
Bestimmen der Winkelorientierung des Gegenstands basierend auf der mindestens einen orientierungsabhängigen optischen Reflexion, **dadurch gekennzeichnet, dass** die mindestens eine orientierungsabhängige optische Reflexion mindestens eine Eigenschaft entsprechend einem Reflexionspunkt besitzt, der sich bezüglich seiner Position über eine Oberfläche des Gegenstands hinweg ändert entsprechend spezifischer Winkelorientierungen des Gegenstands um die mindestens eine Rotationsachse herum.

11. Verfahren gemäß Anspruch 10, wobei der Schritt des Bestimmens der Winkelorientierung ferner die folgenden Schritte aufweist:

Bestimmen eines Auftreffwinkels der mindestens einen orientierungsabhängigen optischen Reflexion;
Bestimmen von mindestens einem Reflexionspunkt auf dem Gegenstand basierend auf dem Auftreffwinkel; und
Bestimmen der Winkelorientierung basierend auf dem mindestens einen Reflexionspunkt.

12. Verfahren gemäß Anspruch 10 oder 11, das ferner die folgenden Schritte aufweist:

Erzeugen von mindestens einer orientierungsunabhängigen optischen Reflexion des Lichtstrahls von dem Gegenstand, wobei die mindestens eine orientierungsunabhängige optische Reflexion einem konstanten Bezugspunkt auf dem Gegenstand entspricht;
Detektieren der mindestens einen orientierungsunabhängigen optischen Reflexion;
Bestimmen eines Trennungsabstands zwischen der mindestens einen orientierungsunabhängigen optischen Reflexion und der mindestens einen orientierungsabhängigen optischen Reflexion; und
Bestimmen der Winkelorientierung des Gegenstands basierend auf dem Trennungsabstand.

13. Verfahren gemäß einem der Ansprüche 10 bis 12, wobei der Schritt des Erzeugens der mindestens einen orientierungsabhängigen optischen Reflexion den Schritt des Koppelns eines Spiegelkuppelreflektors (10) auf dem Gegenstand umfasst, wobei der Spiegelkuppelreflektor eine Außenkrümmungsseite (12) besitzt, die zu dem Lichtstrahl hinweist, welcher zu dem Gegenstand hin projiziert wird.

14. Verfahren gemäß einem der Ansprüche 10 bis 12, wobei der Schritt des Erzeugens mindestens einer orientierungsabhängigen optischen Reflexion einen Schritt des Koppelns eines bogenförmigen Doppelreflektors (16) an dem Gegenstand umfasst, wobei der bogenförmige Doppelreflektor einen langgestreckten Körper (18) mit einer Außenseite (22) sowie erste und zweite abgewinkelte Teile (24, 26) umfasst, wobei die ersten und zweiten abgewinkelten Teile (24, 26) erste bzw. zweite Spiegelreflexionsoberflächen (28, 30) darauf besitzen und mit der Außenseite gekoppelt sind, so dass die ersten und zweiten Spiegelreflexionsoberflächen einander winkelmäßig gegenüberliegen und konvergieren, um einen rechten Winkel dazwischen zu bilden, wodurch die ersten und zweiten Spiegelreflexionsoberflächen zusammenwirken, um den Lichtstrahl optisch zu reflektieren, um eine Bestimmung der Winkelorientierung des Gegenstands bezüglich einer Rotationsachse zu erleichtern, die sich senkrecht zu dem langgestreckten Körper erstreckt.

15. Verfahren gemäß einem der Ansprüche 12 bis 14, wobei der Schritt des Erzeugens mindestens einer orientierungsunabhängigen optischen Reflexion einen Schritt des Koppelns von mindestens einem Retro-Reflektor (14) an dem Gegenstand umfasst, wobei der mindestens eine Retro-Reflektor derart angeordnet ist, dass er zu dem Lichtstrahl weist, welcher zu dem Gegenstand hin projiziert wird, wobei der Retro-Reflektor die mindestens eine orientierungsunabhängige optische Reflexion parallel zu einer Ankunfts- bzw. Auftreffrichtung des Lichtstrahls reflektiert.

16. Verfahren gemäß einem der Ansprüche 10 bis 15, wobei der Schritt des Bestimmens der Winkelorientierung des Gegenstands ferner die folgenden Schritte aufweist:

Modifizieren mindestens einer abfühlbaren Eigenschaft des Lichtstrahls, so dass die mindestens eine abfühlbare Eigenschaft auf die mindestens eine orientierungsabhängige optische Reflexion aufgeprägt wird und sich zusammen mit der Position der mindestens einen orientierungsabhängigen optischen Reflexion ändert; und
Detektieren der mindestens einen abfühlbaren Eigenschaft der mindestens einen orientierungsabhängigen optischen Reflexion.

17. Verfahren gemäß Anspruch 16, wobei die mindestens eine abfühlbare Eigenschaft des Lichtstrahls eine Polarisierung des Lichtstrahls ist.

18. Verfahren gemäß Anspruch 16 oder 17, wobei die mindestens eine abfühlbare Eigenschaft des Lichtstrahls ein Farbspektrum des Lichtstrahls ist.

**19.** Verfahren gemäß einem der Ansprüche 10 bis 15, wobei der Schritt des Bestimmens der Winkelorientierung des Gegenstands einen Schritt des Bestimmens eines Reflexionspunkts entsprechend einem Mittelpunkt oder Zentroid der orientierungsabhängigen optischen Reflexion umfasst.

**Revendications**

**1.** Système optique pour déterminer l'orientation angulaire d'un objet dans une plage de rotation autour d'au moins un axe de rotation, le système optique comprenant en combinaison :

un moyen de réflexion dépendant de l'orientation devant être couplé à l'objet, une source lumineuse et un moyen de détection de lumière, le moyen de source lumineuse (36) fournissant un faisceau de lumière détectable optiquement en direction du moyen de réflexion dépendant de l'orientation,

**caractérisé en ce que** :

le moyen de réflexion dépendant de l'orientation (10, 16) fournit une réflexion optique ayant au moins une propriété détectable correspondant à un point de réflexion sur une surface du moyen de réflexion dépendant de l'orientation qui varie en position en fonction d'une rotation du moyen de réflexion dépendant de l'orientation autour d'au moins un des au moins un axe de rotation ; et
le moyen de détection de lumière (38) est prévu pour détecter des réflexions optiques sur ledit moyen de réflexion dépendant de l'orientation afin de faciliter la détermination de l'orientation angulaire, le moyen de détection de lumière étant positionné de façon adjacente au moyen de source lumineuse, de sorte que au moins le point de réflexion y est déterminé par le moyen de détection de lumière et que l'orientation angulaire de l'objet est déterminée.

**2.** Système optique selon la revendication 1, comprenant en outre un moyen de réflexion indépendant de l'orientation (14) pour fournir une réflexion optique qui correspond à un point constant de référence, ledit moyen de réflexion indépendant de l'orientation étant couplé de façon fixe audit moyen de réflexion dépendant de l'orientation de sorte que lesdits moyens de réflexion fournissent simultanément des réflexions optiques qui varient en distance entre elles en correspondance avec des orientations angulaires particulières.

**3.** Système optique selon les revendications 1 ou 2, dans lequel le moyen de réflexion dépendant de l'orientation est constitué d'un réflecteur à dôme spéculaire (10) ayant un côté à courbure extérieure (12) faisant face au moyen de source lumineuse, par lequel le réflecteur à dôme spéculaire peut faciliter la détermination de l'orientation angulaire d'un objet par rapport à deux axes de rotation.

**4.** Système optique selon les revendications 1 ou 2, dans lequel le moyen de réflexion dépendant de l'orientation est constitué d'un double réflecteur courbe (16), le double réflecteur courbe comprenant un corps allongé (18) ayant un côté extérieur (22), et des première et seconde parties faisant un angle (24, 26) ayant sur elles des première et seconde surfaces réfléchissantes spéculaires respectives (28, 30) couplées au côté extérieur de sorte que les première et seconde surfaces réfléchissantes s'opposent entre-elles angulairement et convergent pour former un angle droit entre elles, par lequel les première et seconde surface réfléchissantes spéculaires coopèrent pour réfléchir optiquement le faisceau lumineux pour ainsi faciliter la détermination de l'orientation angulaire par rapport à un axe de rotation s'étendant perpendiculairement au corps allongé.

**5.** Dispositif selon la revendication 4, dans lequel ledit corps allongé (18) et lesdites première et seconde parties faisant un angle du double réflecteur courbe forment un seul bloc.

**6.** Système optique selon l'une quelconque des revendications 2 à 4, dans lequel le moyen de réflexion indépendant de l'orientation est constitué d'un retroréflecteur (14), le rétroréflecteur facilitant la réflexion du faisceau de lumière vers l'arrière en direction du moyen de source lumineuse parallèlement à la direction d'arrivée du faisceau lumineux.

**7.** Système optique selon l'une quelconque des revendications 1 à 6, dans lequel ledit moyen de détection de lumière détermine le point de réflexion sur le moyen de réflexion dépendant de l'orientation en détectant l'angle d'arrivée du faisceau lumineux réfléchi détectable optiquement.

8. Système optique selon l'une quelconque des revendications 1 à 7, dans lequel la au moins une propriété comprend un centroïde de la réflexion optique.

9. Système optique selon la revendication 8, dans lequel le moyen de détection de lumière détermine le point de réflexion correspondant au centroïde de la réflexion optique.

10. Procédé pour déterminer optiquement l'orientation angulaire d'un objet dans une plage de rotation autour d'au moins un axe de rotation, le procédé comprenant les étapes suivantes :

projection d'un faisceau lumineux détectable optiquement en direction de l'objet ;
production d'au moins une réflexion optique dépendant de l'orientation du faisceau lumineux provenant de l'objet ;
détection de la au moins une réflexion optique dépendant de l'orientation à partir d'un premier emplacement adjacent vers un second emplacement à partir duquel le faisceau lumineux est projeté ; et
détermination de l'orientation angulaire de l'objet sur la base de la au moins une réflexion optique dépendant de l'orientation,

**caractérisé en ce que** la au moins une réflexion optique dépendant de l'orientation possède au moins une propriété correspondant à un point de réflexion qui varie en position sur une surface de l'objet en correspondance avec des orientations angulaires particulières de l'objet autour du au moins un axe de rotation.

11. Procédé selon la revendication 10, dans lequel l'étape de détermination de l'orientation angulaire comprend en outre les étapes suivantes :

déterminer un angle d'arrivée de la au moins une réflexion optique dépendant de l'orientation ;
déterminer au moins un point de réflexion sur l'objet sur la base de l'angle d'arrivée ; et
déterminer l'orientation angulaire sur la base du au moins un point de réflexion.

12. Procédé selon les revendications 10 ou 11, comprenant en outre les étapes suivantes :

production d'au moins une réflexion optique indépendante de l'orientation du faisceau lumineux provenant de l'objet, la au moins une réflexion optique indépendante de l'orientation correspondant à un point de référence constant sur l'objet ;
détection de la au moins une réflexion optique indépendante de l'orientation ;
détermination d'une distance de séparation entre la au moins une réflexion optique indépendante de l'orientation et la au moins une réflexion optique dépendant de l'orientation ; et
détermination de l'orientation angulaire de l'objet sur la base de la distance de séparation.

13. Procédé selon l'une quelconque des revendications 10 à 12, dans lequel l'étape de production d'au moins une réflexion optique dépendant de l'orientation comprend une étape de coupler un réflecteur à dôme spéculaire (10) à l'objet, le réflecteur à dôme spéculaire ayant un côté à courbure extérieure (12) faisant face au faisceau lumineux projeté en direction de l'objet.

14. Procédé selon l'une quelconque des revendications 10 à 12, dans lequel l'étape de production d'au moins une réflexion optique dépendant de l'orientation comprend une étape de coupler un double réflecteur courbe (16) à l'objet, le double réflecteur courbe comprenant un corps allongé (18) ayant un côté extérieur (22), et des première et seconde parties faisant un angle (24, 26) ayant sur elles des première et seconde surfaces réfléchissantes spéculaires (28, 30) couplées audit côté extérieur, de sorte que les première et seconde surfaces réfléchissantes spéculaires s'opposent en faisant un angle entre elles et convergent pour former un angle droit entre elles, par lequel les première et seconde surfaces réfléchissantes spéculaires coopèrent pour réfléchir optiquement le faisceau lumineux afin de faciliter une détermination de l'orientation angulaire de l'objet par rapport à un axe de rotation s'étendant perpendiculairement au corps allongé.

15. Procédé selon l'une quelconque des revendications 12 à 14, dans lequel l'étape de production d'au moins une réflexion optique indépendante de l'orientation comprend une étape de coupler au moins un rétroréflecteur (14) à l'objet, le au moins un rétroréflecteur étant placé de façon à faire face au faisceau lumineux projeté en direction de l'objet, le retroréflecteur réfléchissant la au moins une réflexion optique indépendante de l'orientation parallèlement à une direction d'arrivée du faisceau lumineux.

16. Procédé selon l'une quelconque des revendications 10 à 15, dans lequel l'étape de détermination de l'orientation angulaire de l'objet comprend en outre les étapes de :

modifier au moins une propriété détectable du faisceau lumineux de sorte que la au moins une propriété détectable soit communiquée à la au moins une réflexion optique dépendant de l'orientation et covarie avec la position de la au moins une réflexion optique dépendant de l'orientation ; et
détecter la au moins une propriété détectable de la au moins une réflexion optique dépendant de l'orientation.

17. Procédé selon la revendication 16, dans lequel au moins une propriété détectable du faisceau lumineux est une polarisation du faisceau lumineux.

18. Procédé selon les revendications 16 ou 17, dans lequel au moins une propriété détectable du faisceau lumineux est un spectre colorimétrique du faisceau lumineux.

19. Procédé selon l'une quelconque des revendications 10 à 15, dans lequel l'action de déterminer l'orientation angulaire de l'objet comprend une action de déterminer un point de réflexion correspondant à un centroïde de la réflexion optique dépendant de l'orientation.

Fig. 1

Fig. 2

Fig. 3

EP 1 210 619 B1

Fig. 4

Fig. 5

Fig. 6

Fig. 7

15

Fig. 8

TV-type image

Fig. 9

Fig. 10A

Fig. 10B

Fig. 10C

Fig. 10D

Fig. 11

Fig. 14

Fig. 12

Fig. 13